# EUROPEAN PATENT APPLICATION

(11) **EP 4 607 987 A1**
(43) Date of publication of application: **27.08.2025**
(21) Application number: 24382206.1
(22) Date of filing: 23.02.2024
(51) Int. Cl.: H04W 12/48

(54) **DEVICE-EUICC BINDING BASED ON DEVICE IDENTIFICATION INFORMATION**

(71) Applicant: Giesecke+Devrient Mobile Security Germany GmbH, 81677 München (DE)
(72) Inventor: Gifre, Clara, 08820 El Prat de Llobregat (Barcelona) (ES); Patiño, David, 08820 El Prat de Llobregat (Barcelona) (ES); Totev, Georgy, 08820 El Prat de Llobregat (Barcelona) (ES); Ruau, Federico, 08820 El Prat de Llobregat (Barcelona) (ES); Lorente, Raul, 08820 El Prat de Llobregat (Barcelona) (ES)
(74) Representative: LKGLOBAL Lorenz & Kopf Patentanwalt Attorney at Law PartG mbB

(57) **Abstract**

An eUICC, - hosting, or constructed for hosting, at least one security domain profile, ISD-P, the ISD-P hosting, or constructed for hosting, at least one subscriber profile; - storing pre-stored identification information (PIDI) of a device; - hosting a device-eUICC binding module (BM) constructed to, after each reset of the eUICC; --- receive at the eUICC identification information (IDI) provided by the device; --- compare the received identification information to the pre-stored identification information (PIDI); --- when the received identification information (IDI) corresponds to the pre-stored identification information (PIDI), identify the device and the eUICC in a device-eUICC binding and allow further operation of the eUICC; and --- when the received identification information (IDI) doesn't correspond to the pre-stored identification information (PIDI), identify the device and the eUICC not in a device-eUICC binding and disable the eUICC; **characterized by** - the device-eUICC combination supporting two different communication protocols, namely a first protocol and a second protocol; - the security domains profile, ISD-Ps, of the eUICC being installed such that communication between the device and the security domains profile, ISD-Ps, is performed under the first protocol via a first interface (F1); - the device-eUICC binding module being installed such that communication between the device and the device-eUICC binding module for receiving, at the device-eUICC binding module, the identification information (IDI) provided by the device is performed under the second protocol via a second interface (F2).

## Description

### Field of the invention

The present invention relates to device-eUICC binding based on a device identification information.

### Background of the invention and prior art

Mobile devices, which are understood to be devices having ability to communicate in a mobile network, or having the same meaning wireless network, of a mobile network operator, MNO, are operated with an embedded universal integrated circuit card, eUICC, holding one or several MNO owned profiles (subscriber profiles) enabling attachment to and authentication in the mobile network of the respective MNO. The mobile device is often referred to only as device, as compared to the eUICC hosted in the device. Sometimes, the (mobile) device is alternatively referred to as (mobile) terminal.

An eUICC hosts different security domains, including the issuer security domain root, ISD-R, and one or several issuer security domain(s) profile, ISD-P, also referred to as profile container(s). The ISD-R is the entry point to the eUICC via which a profile server, like the SM-DP+, can provision operational profiles to ISD-Ps of the eUICC. In some eUICCs, the ISD-R is implemented as a security domain with only a reduced data set, whereas in some eUICCs the ISD-R is implemented as a complete root profile.

For eUICCs/UICCs, different form factors are known, including plug-in UICC or SIM card being a removable chipcard hardware insertable to and removable from the mobile device, embedded UICC, eUICC in a strict sense being a SIM-card-like UICC constructed to be soldered into a mobile device, and integrated UICC, iUICC, incorporated into the chipset of the mobile device, without having an own hardware.

In applicable specifications directed to content management (provisioning) of eUICCs/ UICCs having ability to such content management (provisioning), throughout the term eUICC is used, and in connection with the invention, also the term eUICC will be used.

In connection with the present invention, an eUICC is understood to be embodied in any form factor, including plug-in, embedded (soldered in) and integrated, and to have capability for content management of the eUICC, e.g. by Remote and Local SIM Management.

Different types of mobile device are known, including consumer devices like smartphones or tablets or smartwatches, automotive devices designed to be used in motor powered vehicles, and loT devices designed to be operated in an industrial or smart home environment.

Different types of mobile devices have different security and performance capabilities. Consumer devices typically have high security and performance capabilities, whereas loT devices typically have only poor security and performance capabilities. Within the consumer devices, a smartphone may have higher security and/or performance capability as compared to a smartwatch.

For this and further reasons, for example, an eUICC dedicated to a consumer device like a smartphone or smartwatch shall not be operated in combination with an loT device, since the relatively simple and cheap loT device may be unable to provide the high security and performance capabilities that are assumed to be present at a consumer device. Also other combinations of a device and an eUICC which are not provided by the device or/and eUICC launching company may be unwanted.

Moreover, even different devices of the same type, such as two different smartphone models, can have different needs and security and performance capacities, such that running an eUICC in a smartphone for which it is not intended may lead to an increased risk of malfunctions and can be unwanted.

A dedicated mobile device and a dedicated eUICC are often sold in the market as a bundle, wherein the mobile device and the eUICC have a binding between each other, referred to as device-eUICC binding, and shall be operated together, however not the mobile device in combination with a different eUICC or the eUICC in combination with a different mobile device.

Abusive market participants or private persons might seek to insert a plug-in eUICC into a device not dedicated to be used with said device, or even to solder out soldered-in eUICC from a device and re-solder it into a different device. Irrespective of the form factor of the eUICC, there is a need to prevent circumventing the binding between a device and an eUICC desired by a party launching the eUICC or/and the device to the market.

From the prior art, different device-eUICC binding solutions are known.

Document US11805397B2 from the prior art discloses an eUICC-device binding method and corresponding apparatus, wherein an hardware identifier, international mobile equipment identifier IMEI value which is used to identify a wireless device with an MNO, is associated to an ICCID value of an eSIMS on an eUICC, so as to effect a binding between the eSIM on the eUICC and the wireless device.

The IMEI lock binding solution described in US11805397B2 binds the IMEI with the device, and is susceptible to be hacked, since one single device identifier, IMEI, only is involved.

Document US10812970B2 from the prior art discloses an eUICC-device binding solution, referred to as SIM-lock, to control network access associated with a wireless device, and to allow network access with the wireless device only if a host wireless device identification matches a stored wireless device identification, wherein the host and stored wireless device identification is one of several possible IDs, namely mobile equipment identifier MEID, international Mobile Station Equipment Identity IMEI, Electronic Serial Number ESN, or pseudo-ESN pESN.

The binding solution disclosed in US10812970B2 mentions further device ID that may be used instead of the IMEI to effect the eUICC-device binding. Nevertheless, also the further identifiers are susceptible to be hacked.

The document ETSI TS 102 223 V14.0.0 (2017-05), Smart Cards; Card Application Toolkit (CAT) (Release 14), 2017-05, from the prior art discloses commands for exchange of information between a UICC and a terminal. The commands apply particularly to the communication between an eUICC (as the UICC) and a mobile device (as the terminal). Chapter 5.2 describes the TERMINAL PROFILE command used to communicate to the UICC, and receive at the UICC from the terminal, CAT (Card Application Toolkit) facilities supported by the terminal. Part of the facilities comprised in the TERMINAL PROFILE information is the so-called local information. Another command described is the command PROVIDE LOCAL INFORMATION, by which the local information can be received at the UICC from the terminal. According to chapter 6.2, the terminal sends to the UICC an TERMINAL PROFILE during UICC initialization. After the terminal has sent the TERMINAL PROFILE to the UICC, further communication between the UICC and the terminal can follow.

For communication between a device and a UICC or eUICC, several protocols are known, the most used protocols being ISO T=0 and SPI T=1.

### Objective of the invention

It is an object of the present invention to provide a device-eUICC binding solution which is secure and at the same time applicable to a broad range of use cases.

### Summary of the invention

The object of the invention is achieved by an eUICC with following features, according to claim 1. Embodiments of the invention are presented in dependent claims.

In greater detail, the object of the invention is achieved by an eUICC as follows. The eUICC hosts, or constructed for hosting, at least one security domain profile, ISD-P, the ISD-P hosting, or constructed for hosting, at least one subscriber profile. The eUICC stores pre-stored identification information of a device. The eUICC hosts a device-eUICC binding module. The binding module is constructed to, after each reset of the eUICC, receive from the device identification information provided by the device. The binding module compares the received identification information to the pre-stored identification information. When the received identification information corresponds to the pre-stored identification information, the device and the eUICC are identified as being in a device-eUICC binding and further operation of the eUICC is allowed. When the received identification information doesn't correspond to the pre-stored identification information, the device and the eUICC are identified as not being in a device-eUICC binding and the eUICC is disabled.

The eUICC is characterized by
- the device-eUICC combination supporting two different communication protocols, namely a first protocol and a second protocol;
- the security domains profile, ISD-Ps, of the eUICC being installed such that communication between the device and the security domains profile, ISD-Ps, is performed under the first protocol via a first interface;
- the device-eUICC binding module being installed such that communication between the device and the device-eUICC binding module for receiving, at the device-eUICC binding module, the identification information provided by the device is performed under the second protocol via a second interface.

The essential idea of the invention is that, for installing and verifying the device-eUICC binding, a separate interface between the device and the eUICC, operating under a different communication protocol, is used, as compared to the interface and protocol used for normal operation of the device-eUICC combination.

As compared to device-eUICC binding solutions verifying IMSI over the same protocol and interface which is also used for normal communication, the separate protocol and interface of the present invention may prevent intrusion over the protocol and interface used for normal communication to circumvent the device-eUICC binding. On the other hand, the normal communication protocol and interface may remain unchanged, allowing to use the proposed solution in a broad range of use cases. Preferably, also the second protocol and interface are selected as a protocol and interface having a reasonable spread and distribution in devices and eUICCs, so as to ensure the solution is broadly applicable.

Accordingly, the present invention provides device-eUICC binding solution which is secure and at the same time applicable to a broad range of use cases.

According to some embodiments, the device-eUICC binding module (in the eUICC) is constructed to receive the eUICC identification information provided by the device in a specific APDU message, which is a specific APDU command or specific APDU reply.

According to some embodiments, the received, pre-stored and compared identification information comprises one or several identifiers selected from: IMEl, IMEISV, ESN, MEID, one or several facilities supported by the terminal as indicated in the TERMINAL PROFILE, local information as indicated in the PROVIDE LOCAL INFORMATION response, or any similar identifier available in the device.

According to some embodiments, the first and second protocol are different protocols selected from:
- the ISO T=0 protocol;
- the SPI T=1 protocol.

Both the ISO T=0 protocol and SPI T=1 protocol are widely usual and spread in the market, making the solution according the here-indicated embodiment broadly applicable. According to some embodiments, the first protocol, for normal communication, is ISO T=0, and the second protocol, for communication in connection with the device-eUICC binding, is SPI T=1.

A method for installing a device-eUICC binding between an eUICC and a target device is based on an eUICC hosting, or constructed for hosting, at least one security domain profile, ISD-P, the ISD-P hosting, or constructed for hosting, at least one subscriber profile. The eUICC further hosts a device-eUICC binding module.

The method comprises:
- taking into operation the eUICC in the target device and resetting the eUICC;
- running the device-eUICC binding module, comprising:
   --- receive identification information provided by the target device;
   --- store the received identification information as pre-stored identification information of the device.

The method is characterized by
- the device-eUICC combination supporting two different communication protocols, namely a first protocol and a second protocol;
- the security domains profile, ISD-Ps, of the eUICC being installed such that communication between the device and the security domains profile, ISD-Ps, is performed under the first protocol via a first interface;
- the device-eUICC binding module receiving the identification information provided by the device under the second protocol via a second interface.

The method according to some embodiments further comprises:
- upon running the device-eUICC binding module, examine if pre-stored identification information is stored in the eUICC;
- in case no pre-stored identification information is stored in the eUICC, continue the method for installing a device-eUICC binding;
- in case pre-stored identification information is stored in the eUICC, continue with either one or several of the following:
   --- abort the method for installing a device-eUICC binding;
   --- prompt to a user of the device to input a decision if to install a new device-eUICC binding or to verify a device-eUICC binding;
   --- execute a method for verifying a device-eUICC binding.

According to some embodiments, installing the device-eUICC binding is enabled upon the first power-up of the eUICC in a device, and is disabled upon any subsequent power-up of the same eUICC in any device. In such embodiments, preferably, upon a first power-up of the eUICC, a method for installing the device-eUICC binding is initiated and performed, and in any following power-up of the eUICC, verifying the device-eUICC binding is initiated and performed.

A method for verifying a device-eUICC binding between an eUICC and a device is based on an eUICC hosting, or constructed for hosting, at least one security domain profile, ISD-P, the ISD-P hosting, or constructed for hosting, at least one subscriber profile. The eUICC further hosts a device-eUICC binding module. The eUICC stores pre-stored identification information of a target device. The pre-stored identification information of a target device may have been installed by any of the above described methods and embodiments for installing a device-eUICC binding.

The method comprises:
- taking into operation the eUICC in the device and resetting the eUICC;
- running the device-eUICC binding module, comprising:
   --- receive at the eUICC identification information provided by the device;
   --- compare the received identification information to the pre-stored identification information;
   --- when the received identification information corresponds to the pre-stored identification information, identify the device and the eUICC in a device-eUICC binding and allow further operation of the eUICC; and
   --- when the received identification information doesn't correspond to the pre-stored identification information, identify the device and the eUICC not in a device-eUICC binding and disable the eUICC.

The method is characterized by
- the device-eUICC combination supporting two different communication protocols, namely a first protocol and a second protocol;
- the security domains profile, ISD-Ps, of the eUICC being installed such that communication between the device and the security domains profile, ISD-Ps, is performed under the first protocol via a first interface;
- the device-eUICC binding module receiving the identification information (IDI) provided by the device under the second protocol via a second interface.

According to some embodiments, the device-eUICC binding module receives the eUICC identification information provided by the device in a specific APDU message, which is a specific APDU command or specific APDU reply.

According to some embodiments, the first and second protocol are different protocols selected from:
- the ISO T=0 protocol;
- the SPI T=1 protocol.

According to some embodiments, the first protocol is ISO T=0, and the second protocol is SPI T=1.

A device may be hosting an eUICC according to the present invention.

A system may be comprising a device according to the present invention and at least one mobile network, the system being constructed to allow attachment of the device to the mobile network when the device and the eUICC are in a device-eUICC binding, and to disallow attachment of the device to the mobile network when the device and the eUICC are not in a device-eUICC binding.

A computer readable medium may be having installed code when executed performing a method according to the present invention.

### Brief description of the drawings

Embodiments of the invention will now be described with reference to the accompanying drawings, throughout which like parts are referred to by like references, and in which represents:
Fig. 1 a method for installing a device-eUICC binding, according to an embodiment of the invention;
Fig. 2 a method for verifying a device-eUICC binding, according to an embodiment of the invention.

### Detailed description of the invention

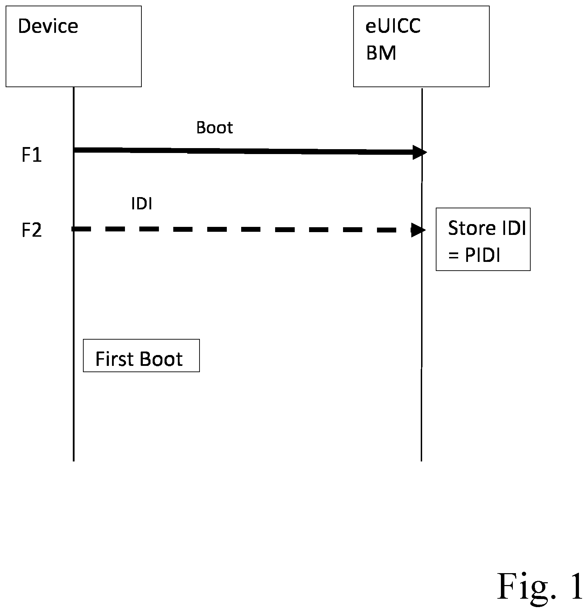

Fig. 1 shows a method for installing a device-eUICC binding, according to an embodiment of the invention. The eUICC hosts, or is constructed for hosting, one or several security domain profile, ISD-P, constructed for receiving subscriber profiles. Further, the eUICC hosts a binding module BM.

According to an embodiment of the invention, the device-eUICC combination supports two different communication protocols, namely a first protocol and a second protocol. Herein, the security domains profile, ISD-Ps, of the eUICC are installed such that communication between the device and the security domains profile, ISD-Ps, of the eUICC is performed under the first protocol via a first interface F1. The device-eUICC binding module BM, on the other hand, is installed such that communication between the device and the device-eUICC binding module for receiving, at the device-eUICC binding module, the identification information IDI provided by the device is performed under the second protocol via a second interface F2.

For installing the device-eUICC binding, first, the device boots the eUICC under a first protocol, over a first interface F1. Next, the device sends to the eUICC identification information IDI under the second protocol, over the second interface F2. The device-eUICC binding module BM (in the eUICC) receives the identification information IDI provided by the device under the second protocol via a second interface F2. The eUICC stores the identification information IDI of the device as pre-stored identification information PIDI, and hereby establishes a binding between the device and the eUICC.

Preferably the first protocol and interface F1 are the primary and standard protocol and interface which is normally used for communication between the device and the eUICC, and the second protocol and interface F2 are a secondary protocol and interface which are not normally used for communication between the device and the eUICC.

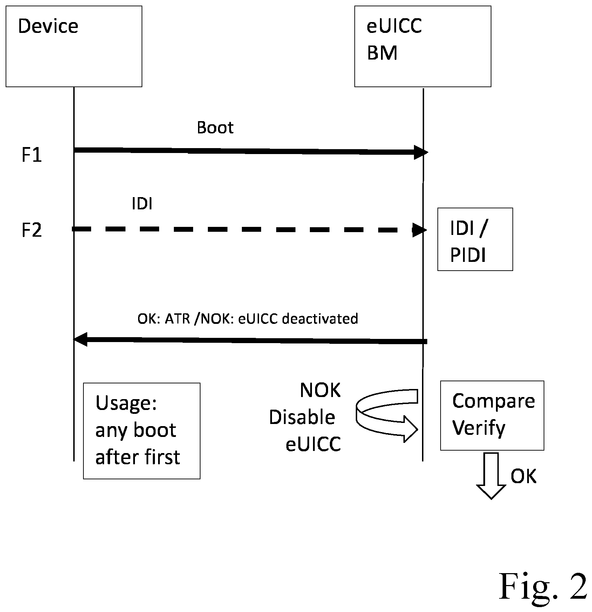

Fig. 2 shows a method for verifying a device-eUICC binding, according to an embodiment of the invention. The eUICC hosts, or is constructed for hosting, one or several security domain profile, ISD-P, constructed for receiving subscriber profiles. Further, the eUICC hosts a binding module BM.

For verifying the device-eUICC binding, first, the device boots the eUICC under a first protocol, over a first interface F1. Next, the device sends to the eUICC identification information IDI under the second protocol, over the second interface F2. The device-eUICC binding module BM (in the eUICC) receives the identification information IDI provided by the device under the second protocol via a second interface F2. The eUICC compares the received identification information IDI of the device against the pre-stored identification information PIDI, and hereby verifies the binding between the device and the eUICC.

When the received identification information IDI corresponds to the pre-stored identification information PIDI, it is identified that the device and the eUICC are in a device-eUICC binding, and further operation of the eUICC is allowed.

When the received identification information IDI doesn't correspond to the pre-stored identification information PIDI, it is identified that the device and the eUICC are not in a device-eUICC binding, and the eUICC is disabled.

Preferably, the device, upon boot, resets the eUICC. The eUICC, in case it is identified that the device and the eUICC are in a device-eUICC binding, sends back to the device and answer-to-reset ATR. In case it is identified that the device and the eUICC are not in a device-eUICC binding, the eUICC does not reply to the device with the expected ATR.

### Cited documents

US10812970B2
US11805397B2
ETSI TS 102 223 V14.0.0 (2017-05), Smart Cards; Card Application Toolkit (CAT) (Release 14), 2017-05

## Claims

1. An eUICC,
- hosting, or constructed for hosting, at least one security domain profile, ISD-P, the ISD-P hosting, or constructed for hosting, at least one subscriber profile;
- storing pre-stored identification information (PIDI) of a device;
- hosting a device-eUICC binding module (BM) constructed to, after each reset of the eUICC;
--- receive at the eUICC identification information (IDI) provided by the device;
--- compare the received identification information to the pre-stored identification information (PIDI);
--- when the received identification information (IDI) corresponds to the pre-stored identification information (PIDI), identify the device and the eUICC in a device-eUICC binding and allow further operation of the eUICC; and
--- when the received identification information (IDI) doesn't correspond to the pre-stored identification information (PIDI), identify the device and the eUICC not in a device-eUICC binding and disable the eUICC;
**characterized by**
- the device-eUICC combination supporting two different communication protocols, namely a first protocol and a second protocol;
- the security domains profile, ISD-Ps, of the eUICC being installed such that communication between the device and the security domains profile, ISD-Ps, is performed under the first protocol via a first interface (F1);
- the device-eUICC binding module being installed such that communication between the device and the device-eUICC binding module for receiving, at the device-eUICC binding module, the identification information (IDI) provided by the device is performed under the second protocol via a second interface (F2).

2. The eUICC according to claim 1, wherein the device-eUICC binding module (BM) is constructed to receive the eUICC identification information (IDI) provided by the device in a specific APDU message, which is a specific APDU command or specific APDU reply.

3. The eUICC according to claim 1 or 2, wherein the identification information (IDI, PIDI) comprises one or several identifiers selected from: IMEl, IMEISV, ESN, MEID, one or several facilities supported by the terminal as indicated in the TERMINAL PROFILE, local information as indicated in the PROVIDE LOCAL INFORMATION response, or any similar identifier available in the device.

4. The eUICC according to any of claims 1 to 3, wherein the first and second protocol are different protocols selected from:
- the ISO T=0 protocol;
- the SPI T=1 protocol.

5. The eUICC according to claim 4, wherein the first protocol is ISO T=0, and the second protocol is SPI T=1.

6. A method for installing a device-eUICC binding between an eUICC and a target device;
- the eUICC hosting, or constructed for hosting, at least one security domain profile, ISD-P, the ISD-P hosting, or constructed for hosting, at least one subscriber profile;
- the eUICC hosting a device-eUICC binding module (BM);
the method comprising:
- taking into operation the eUICC in the target device and resetting the eUICC;
- running the device-eUICC binding module (BM), comprising:
--- receive identification information (IDI) provided by the target device;
--- store the received identification information (IDI) as pre-stored identification information (PIDI) of the device;
**characterized by**
- the device-eUICC combination supporting two different communication protocols, namely a first protocol and a second protocol;
- the security domains profile, ISD-Ps, of the eUICC being installed such that communication between the device and the security domains profile, ISD-Ps, is performed under the first protocol via a first interface (F1);
- the device-eUICC binding module (BM) receiving the identification information (IDI) provided by the device under the second protocol via a second interface (F2).

7. The method according to claim 6, further comprising
- upon running the device-eUICC binding module (BM), examine if pre-stored identification information (PIDI) is stored in the eUICC;
- in case no pre-stored identification information (PIDI) is stored in the eUICC, continue the method for installing a device-eUICC binding;
- in case pre-stored identification information (PIDI) is stored in the eUICC, continue with either one or several of the following:
--- abort the method for installing a device-eUICC binding;
--- prompt to a user of the device to input a decision if to install a new device-eUICC binding or to verify a device-eUICC binding;
--- execute a method for verifying a device-eUICC binding.

8. The method according to any of claims 6 to 7, wherein installing the device-eUICC binding is enabled upon the first power-up of the eUICC in a device, and is disabled upon any subsequent power-up of the same eUICC in any device.

9. A method for verifying a device-eUICC binding between an eUICC and a device;
- the eUICC hosting, or constructed for hosting, at least one security domain profile, ISD-P, the ISD-P hosting, or constructed for hosting, at least one subscriber profile;
- the eUICC hosting a device-eUICC binding module (BM);
- the eUICC storing pre-stored identification information (PIDI) of a target device;
the method comprising:
- taking into operation the eUICC in the device and resetting the eUICC;
- running the device-eUICC binding module (BM), comprising:
--- receive at the eUICC identification information (IDI) provided by the device;
--- compare the received identification information (IDI) to the pre-stored identification information (PIDI);
--- when the received identification information (IDI) corresponds to the pre-stored identification information (PIDI), identify the device and the eUICC in a device-eUICC binding and allow further operation of the eUICC; and
--- when the received identification information (IDI) doesn't correspond to the pre-stored identification information (PIDI), identify the device and the eUICC not in a device-eUICC binding and disable the eUICC;
**characterized by**
- the device-eUICC combination supporting two different communication protocols, namely a first protocol and a second protocol;
- the security domains profile, ISD-Ps, of the eUICC being installed such that communication between the device and the security domains profile, ISD-Ps, is performed under the first protocol via a first interface (F1);
- the device-eUICC binding module (BM) receiving the identification information (IDI) provided by the device under the second protocol via a second interface (F2).

10. The method according to any of claims 6 to 9, wherein the device-eUICC binding module (BM) receives the eUICC identification information (IDI) provided by the device in a specific APDU message, which is a specific APDU command or specific APDU reply.

11. The method according to any of claims 6 to 10, wherein the first and second protocol are different protocols selected from:
- the ISO T=0 protocol;
- the SPI T=1 protocol.

12. The method according to claim 11, wherein the first protocol is ISO T=0, and the second protocol is SPI T=1.

13. A device hosting an eUICC according to any of claims 1 to 5.

14. A system comprising a device according to claim 13 and at least one mobile network, the system constructed to allow attachment of the device to the mobile network when the device and the eUICC are in a device-eUICC binding, and to disallow attachment of the device to the mobile network when the device and the eUICC are not in a device-eUICC binding.

15. A computer readable medium having installed code when executed performing a method according to any of claims 6 to 12.

## Amended claims

### Amended claims in accordance with Rule 137(2) EPC.

1. An embedded Universal Integrated Circuit Card, eUICC, dedicated to a device, such as a consumer device or an loT device, to be operated in combination with the device as a dedicated device-eUICC combination, the eUICC
- hosting in the eUICC at least one security domain profile, ISD-P, the at least one ISD-P hosting, or constructed for hosting, at least one subscriber profile;
- storing pre-stored identification information (PIDI) of a device;
- hosting a device-eUICC binding module (BM) constructed to, after each reset of the eUICC;
--- receive at the device binding module (BM) in the eUICC identification information (IDI) provided by the device;
--- compare the received identification information to the pre-stored identification information (PIDI);
--- when the received identification information (IDI) corresponds to the pre-stored identification information (PIDI), identify the device and the eUICC as a dedicated device-eUICC combination in a device-eUICC binding and allow further operation of the eUICC; and
--- when the received identification information (IDI) doesn't correspond to the pre-stored identification information (PIDI), identify the device and the eUICC as an unwanted device-eUICC combination not in a device-eUICC binding and disable the eUICC;
**characterized by**
- the dedicated device-eUICC combination supporting two different communication protocols, namely a first protocol and a second protocol;
- a security domains profile, ISD-Ps, of the eUICC being installed such that communication between the device and the ISD-Ps is performed under the first protocol via a first interface (F1);
- the device-eUICC binding module being installed such that communication between the device and the device-eUICC binding module for receiving, at the device-eUICC binding module, the identification information (IDI) provided by the device is performed under the second protocol via a second interface (F2).

2. The eUICC according to claim 1, wherein the device-eUICC binding module (BM) is constructed to receive the eUICC identification information (IDI) provided by the device in a specific APDU message, which is a specific APDU command or specific APDU reply.

3. The eUICC according to claim 1 or 2, wherein the identification information (IDI, PIDI) comprises one or several identifiers selected from: IMEI, IMEISV, ESN, MEID, one or several facilities supported by the terminal as indicated in a TERMINAL PROFILE, local information as indicated in a PROVIDE LOCAL INFORMATION response,.

4. The eUICC according to any of claims 1 to 3, wherein the first and second protocol are different protocols selected from:
- an ISO T=0 protocol;
- an SPI T=1 protocol.

5. The eUICC according to claim 4, wherein the first protocol is ISO T=0, and the second protocol is SPI T=1.

6. A method for installing a device-eUICC binding between an embedded Universal Integrated Circuit Card, eUICC, dedicated to a device, such as a consumer device or an loT device, and a target device to be operated in combination with the eUICC as a dedicated device-eUICC combination; the method comprising:
- hosting on the eUICC at least one security domain profile, ISD-P, the ISD-P hosting, or constructed for hosting, at least one subscriber profile;
- hosting on the eUICC a device-eUICC binding module (BM);
- taking into operation the eUICC in the target device and resetting the eUICC;
- running the device-eUICC binding module (BM), comprising:
--- receiving at the device binding module (BM) on the eUICC identification information (IDI) provided by the target device;
--- storing the received identification information (IDI) as pre-stored identification information (PIDI) of the device;
**characterized by**
- supporting two different communication protocols with the dedicated device-eUICC combination, namely a first protocol and a second protocol;
- installing the security domains profile, ISD-Ps, of the eUICC such that communication between the device and the ISD-Ps is performed under the first protocol via a first interface (F1);
- receiving at the device-eUICC binding module (BM) on the eUICC the identification information (IDI) provided by the device under the second protocol via a second interface (F2).

7. The method according to claim 6, further comprising
- upon running the device-eUICC binding module (BM), examine if pre-stored identification information (PIDI) is stored in the eUICC;
- in case no pre-stored identification information (PIDI) is stored in the eUICC, continue the method for installing a device-eUICC binding;
- in case pre-stored identification information (PIDI) is stored in the eUICC, continue with either one or several of the following:
--- abort the method for installing a device-eUICC binding;
--- prompt to a user of the device to input a decision if to install a new device-eUICC binding or to verify a device-eUICC binding; and
--- execute a method for installing a new device-eUICC binding or for verifying a device-eUICC binding.

8. The method according to any of claims 6 to 7, wherein the steps for installing the device-eUICC binding are being enabled upon the first power-up of the eUICC in a device, and are being disabled upon any subsequent power-up of the same eUICC in any device.

9. A method for verifying a device-eUICC binding between an embedded Universal Integrated Circuit Card, eUICC, and a device, such as a consumer device or an loT device, to be operated in combination with the eUICC as a dedicated device-eUICC combination, the method comprising:
- hosting on the eUICC at least one security domain profile, ISD-P, the at least one ISD-P hosting, or constructed for hosting, at least one subscriber profile;
- hosting on the eUICC a device-eUICC binding module (BM);
- storing on the eUICC pre-stored identification information (PIDI) of a dedicated device;
- taking into operation the eUICC in the device and resetting the eUICC;
- running the device-eUICC binding module (BM), comprising:
--- receiving at the device binding module (BM) on the eUICC identification information (IDI) provided by the device;
--- comparing the received identification information (IDI) to the pre-stored identification information (PIDI);
--- wherein when the received identification information (IDI) corresponds to the pre-stored identification information (PIDI), the device and the eUICC are being identified as a dedicated device-eUICC combination in a device-eUICC binding and operation of the eUICC is being further allowed; and
--- when the received identification information (IDI) doesn't correspond to the pre-stored identification information (PIDI), the device and the eUICC are being identified as not in a device-eUICC binding and the eUICC is being disabled;
**characterized by**
- supporting two different communication protocols with the dedicated device-eUICC combination, namely a first protocol and a second protocol;
- installing the security domains profile, ISD-Ps, of the eUICC such that communication between the device and the ISD-Ps is performed under the first protocol via a first interface (F1); and
- receiving at the device-eUICC binding module (BM) on the eUICC the identification information (IDI) provided by the device under the second protocol via a second interface (F2).

10. The method according to any of claims 6 to 9, wherein the device-eUICC binding module (BM) receives the eUICC identification information (IDI) provided by the device in a specific APDU message, which is a specific APDU command or specific APDU reply.

11. The method according to any of claims 6 to 10, wherein the first and second protocol are different protocols selected from:
- an ISO T=0 protocol;
- an SPI T=1 protocol.

12. The method according to claim 11, wherein the first protocol is ISO T=0, and the second protocol is SPI T=1.

13. A device hosting in the device an eUICC according to any of claims 1 to 5.

14. A system comprising a device according to claim 13 and at least one mobile network, the system constructed to carry out a method according to any of claims 6 to 12 to allow attachment of the device to the mobile network when the device and the eUICC are in a device-eUICC binding, and to disallow attachment of the device to the mobile network when the device and the eUICC are not in a device-eUICC binding.

15. A computer readable medium having installed code which, when executed by an embedded Universal Integrated Circuit Card, eUICC, causes the eUICC to perform a method according to any of claims 6 to 12.
